(19) Europäisches Patentamt
European Patent Office
Office européen des brevets

(11) **EP 1 298 781 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(51) Int Cl.:
***H02M 7/48*** (2007.01)    ***H02M 3/158*** (2006.01)

(21) Anmeldenummer: **01810944.7**

(22) Anmeldetag: **27.09.2001**

(54) **Stromrichterschaltungsanordnung sowie Verfahren zur Anpassung einer variablen Gleichspannung**

Power converter device and method for adjusting a variable DC voltage

Dispositif de conversion de puissance et procédé pour adapter une tension continue variable

(84) Benannte Vertragsstaaten:
**CH DE FR GB IT LI**

(43) Veröffentlichungstag der Anmeldung:
**02.04.2003 Patentblatt 2003/14**

(73) Patentinhaber: **ABB Schweiz AG**
**5400 Baden (CH)**

(72) Erfinder:
• **Daehler, Peter**
**5236 Remingen (CH)**
• **Gaupp, Osvin**
**5400 Baden (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

(56) Entgegenhaltungen:
• **PATENT ABSTRACTS OF JAPAN vol. 2000, no. 13, 5. Februar 2001 (2001-02-05) & JP 2000 287441 A (SHINDENGEN ELECTRIC MFG CO LTD), 13. Oktober 2000 (2000-10-13)**
• **SCHUETZE T ET AL: "LOW FLOOR TRAMS WITH IGBT-3-LEVEL INVERTER" DRIVES 2. BRIGHTON, SEPT. 13 - 16, 1993, PROCEEDINGS OF THE EUROPEAN CONFERENCE ON POWER ELECTRONICS AND APPLICATIONS, LONDON, IEE, GB, Bd. 6 CONF. 5, 13. September 1993 (1993-09-13), Seiten 92-96, XP000416848**
• **TAMAI S ET AL: "3 LEVEL GOT CONVERTER-INVERTER PAIR SYSTEM FOR LARGE CAPACITY INDUCTION MOTOR DRIVE" DRIVES 1. BRIGHTON, SEPT. 13 - 16, 1993, PROCEEDINGS OF THE EUROPEAN CONFERENCE ON POWER ELECTRONICS AND APPLICATIONS, LONDON, IEE, GB, Bd. 5 CONF. 5, 13. September 1993 (1993-09-13), Seiten 45-50, XP000416868**

## Beschreibung

### Technisches Gebiet

Die Erfindung bezieht sich auf das Gebiet der Leistungselektronik. Sie geht aus von einer Stromrichterschaltungsanordnung und einem Verfahren zur Anpassung einer variablen Gleichspannung gemäss dem Oberbegriff der unabhängigen Ansprüche.

### Stand der Technik

Zweipolige Gleichspannungsquellen mit einer variablen ausgangsseitigen Gleichspannung sind beispielsweise aus Brennstoffzellenanwendungen bekannt, wobei die Brennstoffzelle eine solche Gleichspannungsquelle mit einer variablen Gleichspannung darstellt. Gängigerweise speist eine derartige Gleichspannungsquelle aufgrund der unterschiedlichen Gleichspannungsniveaus einen Dreipunkt-Gleichspannungszwischenkreis, der durch einen ersten Kondensator und einen dazu in Serie geschalteten zweiten Kondensator gebildet ist. Ein Anschluss des ersten Kondensators bildet weiterhin einen oberen Anschluss des Dreipunkt-Gleichspannungszwischenkreises und ein Anschluss des zweiten Kondensators bildet einen unteren Anschluss des Dreipunkt-Gleichspannungszwischenkreises. Am Verschaltungspunkt des ersten Kondensators mit dem zweiten Kondensator ist desweiteren ein Mittelpunktanschluss des Dreipunkt-Gleichspannungszwischenkreises gebildet. Üblicherweise ist mit dem oberen Anschluss, dem Mittelanschluss und dem unteren Anschluss des Dreipunkt-Gleichspannungszwischenkreises eine Dreipunktstromrichterschaltung verbunden, die eine Ansteuerschaltung zur Erzeugung von Ansteuersignalen aufweist, wobei Leistungsschalter der Dreipunktstromrichterschaltung nach Massgabe der Ansteuersignale angesteuert werden. Die Dreipunktstromrichterschaltung ermöglicht eine Einspeisung elektrischer Energie der Gleichspannungsquelle beispielsweise in ein elektrisches Wechselspannungsversorgungsnetz. In "Patent Abstract of Japan vol.2000, no. 13, 05.02.2001 & JP2000287441A (Shindengen Electric MFG Co. Ltd.), 13.10.2000" ist eine Stromrichterschaltungsanordnung mit einem solchen vorstehend beschriebenen Dreipunkt-Gleichspannungszwischenkreis angegeben, welche ferner ein erstes und zweites Teilstromrichtersystem aufweist, wobei die Teilstromrichtersysteme mit der Gleichspannungsquelle und mit dem Dreipunkt-Gleichspannungszwischenkreis verbunden sind.

Problematisch bei einer solchen Dreipunktstromrichterschaltung ist, dass Leistungsschalter der Dreipunktstromrichterschaltung zur Schaltung des grossen Bereichs der Gleichspannung der Gleichspannungsquelle auf diesen Bereich, insbesondere leistungsmässig ausgelegt sein müssen. Dies verursacht jedoch erhebliche Kosten, wobei bei der Auslegung zusätzlich genügend Spannungsreserve berücksichtigt sein muss. Über solche Spannungsreserven verfügen aber derzeit nur sehr teure Bauelementen und/oder ist nur mit einem grossen Schaltungsaufwand bewältigbar. Dadurch, dass die Gleichspannungsquelle direkt mit dem Dreipunkt-Gleichspannungszwischenkreis verbunden ist, korreliert die Zwischenkreisspannung mit der variablen Gleichspannung, wodurch eine kontrollierte Energieübertragung in ein elektrisches Wechselspannungsversorgungsnetz nur über eine aufwendige und komplizierte Ansteuerschaltung zur Ansteuerung der Leistungsschalter der Dreipunktstromrichterschaltung möglich ist.

### Darstellung der Erfindung

Aufgabe der Erfindung ist es deshalb, eine Stromrichterschaltungsanordnung zur Anpassung einer variablen Gleichspannung anzugeben, mit welcher eine im wesentlichen konstante Zwischenkreisspannung eines Dreipunkt-Gleichspannungszwischenkreises erzeugt werden kann. Ferner ist ein Verfahren zur Anpassung der variablen Gleichspannung anzugeben, mit dem die im wesentlichen konstante Zwischenkreisspannung in besonders einfacher Weise generiert wird. Diese Aufgaben werden durch die Merkmale des Anspruchs 1 und 9 gelöst. In den Unteransprüchen sind vorteilhafte Weiterbildungen der Erfindung angegeben.

Die erfindungsgemässe Stromrichterschaltungsanordnung zur Anpassung einer variablen Gleichspannung weist eine Ansteuerschaltung zur Erzeugung von Ansteuersignalen und einen Dreipunkt-Gleichspannungszwischenkreis auf. Der Dreipunkt-Gleichspannungszwischenkreis ist durch einen ersten Kondensator und einen dazu in Serie geschalteten zweiten Kondensator gebildet, wobei ein Anschluss des ersten Kondensators einen oberen Anschluss des Dreipunkt-Gleichspannungszwischenkreises bildet und der erste Kondensator am Verschaltungspunkt mit dem zweiten Kondensator einen Mittelpunktanschluss bildet. Weiterhin bildet ein Anschluss des zweiten Kondensators einen unteren Anschluss des Dreipunkt-Gleichspannungszwischenkreises bildet. Erfindungsgemäss ist ein erstes Teilstromrichtersystem und ein zweites Teilstromrichtersystem vorgesehen, wobei das erste Teilstromrichtersystem eingangsseitig an einem ersten Pol einer die Gleichspannung erzeugende Gleichspannungsquelle angeschlossen ist und das zweite Teilstromrichtersystem eingangsseitig an einem zweiten Pol der Gleichspannungsquelle angeschlossen ist. Darüber hinaus ist das erste Teilstromrichtersystem mit einem ersten Ausgang mit dem oberen Anschluss verbunden und das zweite Teilstromrichtersystem mit einem ersten Ausgang mit dem unteren Anschluss verbunden. Ferner ist ein zweiter Ausgang des ersten Teilstromrichtersystems mit einem zweiten Ausgang des zweiten Teilstromrichtersystems über den Mittelpunktanschluss in Serie geschaltet ist. Mittels der erfindungsgemässen Stromrichterschaltungsanordnung ist es vorteilhaft möglich, eine im wesentlichen konstante Zwischenkreisspannung des Gleichspannungszwischenkreises zu generieren, wobei das erste Teilstromrichtersystem eine am ersten Kondensator anliegende erste Zwischenkreisspannung und das zweite Teilstromrichtersystem eine am zweiten Kondensator anliegende Zwischenkreisspannung im wesentlichen konstant einstellt. Dadurch können Leistungsschalter einer vom Dreipunkt-Gleichspannungszwischenkreis gespeisten Dreipunktstromrichterschaltung für die im wesentlichen konstante Zwischenkreisspannung ausgelegt werden und müssen nicht auf eine grosse Spannungsreserve hin überdimensioniert werden, wodurch erhebliche Kosten eingespart werden können. Weiterhin entfällt eine aufwendige und komplizierte Ansteuerschaltung zur Ansteuerung der Leistungsschalter der Dreipunktstromrichterschaltung um eine kontrollierte Energieübertragung in ein elektrisches Wechselspannungsversorgungsnetz zu ermöglichen. Darüber hinaus kommt die Stromrichterschaltungsanordnung mit einer minimalen Anzahl an Komponenten aus und kann mit einem geringen Mass an Schaltungsaufwand realisiert werden. Zudem gestaltet sich die Stromrichterschaltungsanordnung nach der Erfindung aufgrund des einfachen Aufbaus und der wenigen Komponenten als sehr wartungs- und reparaturfreundlich.

Die Stromrichterschaltungsanordnung nach der Erfindung wird in Anspruch 1 ausgeführt.

Beim erfindungsgemässen Verfahren zur Anpassung der variablen Gleichspannung mittels der vorstehend beschriebenen erfindungsgemässen Stromrichterschaltungsanordnung wird das erste Teilstromrichtersystem derart angesteuert, dass die erste Zwischenkreisspannung auf einen vorgegebbaren Zwischenkreisspannungssollwert eingestellt wird. Darüber hinaus wird das zweite Teilstromrichtersystem derart angesteuert, dass die zweite Zwischenkreisspannung auf den vorgegebbaren Zwischenkreisspannungssollwert eingestellt wird. Mittels dieser Ansteuerung der Teilstromrichtersysteme wird mit Vorteil eine im wesentlichen konstante Zwischenkreisspannung, insbesondere der ersten und zweiten Zwischenkreisspannung auf sehr einfache Weise erzeugt. Die gängigerweise mit dem Dreipunkt-Gleichspannungszwischenkreis verbundene Dreipunktstromrichterschaltung benötigt demnach vorteilhaft kein kompliziertes und auf eine variable Gleichspannung ausgerichtetes Ansteuerverfahren für die Leistungsschalter der Dreipunktstromrichterschaltung. Zudem lässt sich der Dreipunkt-Gleichspannungszwischenkreis mit dem erfindungsgemässen Verfahren erfolgreich stabilisieren.

Das Verfahren nach der Erfindung wird in Anspruch 9 ausgeführt.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

**Kurze Beschreibung der Zeichnungen**

Es zeigen:

Fig. 1    eine erste Ausführungsform einer erfindungsgemässen Stromrichterschaltungsanordnung,

Fig. 2    eine zweite Ausführungsform einer erfindungsgemässen Stromrichterschaltungsanordnung und

Fig. 3    eine Ausführungsform einer Ansteuerschaltung einer erfindungsgemässen Stromrichterschaltungsanordnung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

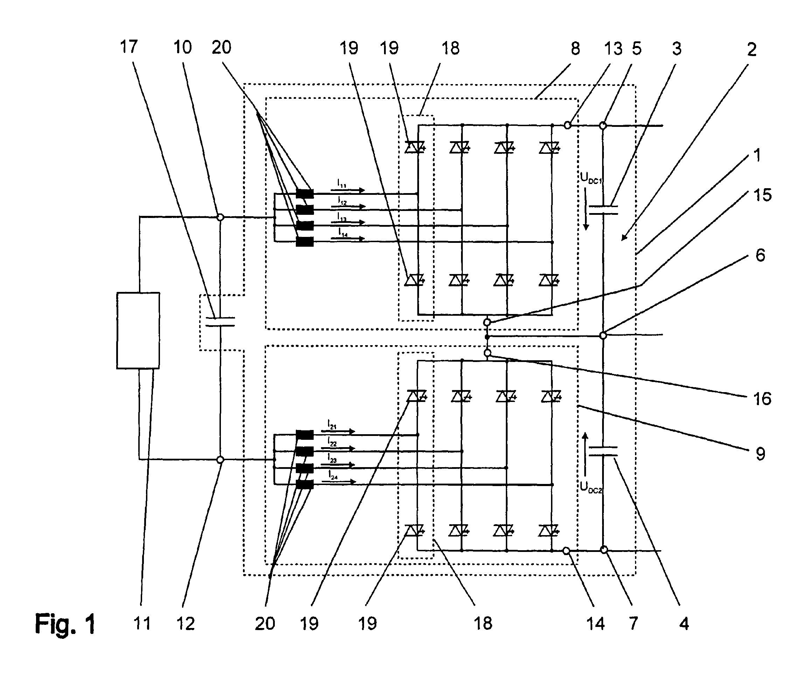

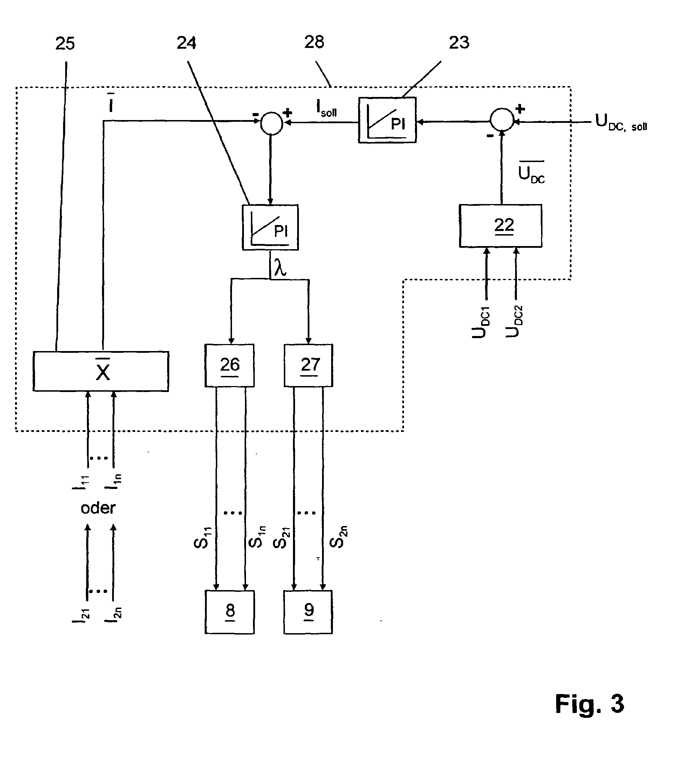

In Fig. 1 ist eine erste Ausführungsform einer erfindungsgemässen Stromrichterschaltungsanordnung 1 zur Anpassung einer variablen Gleichspannung gezeigt. Die Stromrichterschaltungsanordnung 1 umfasst eine Ansteuerschaltung 28 zur Erzeugung von Ansteuersignalen $S_{11},...S_{1n}$; $S_{21},...S_{2n}$, wobei eine Ausführungsform einer solchen Ansteuerschaltung 28 in Fig. 3 dargestellt ist und später beschrieben wird. Weiterhin weist die Stromrichterschaltungsanordnung 1 einen Dreipunkt-Gleichspannungszwischenkreis 2 auf, der durch einen ersten Kondensator 3 und einen dazu in Serie geschalteten zweiten Kondensator 4 gebildet ist, wobei ein Anschluss des ersten Kondensators 3 einen oberen Anschluss 5 des Dreipunkt-Gleichspannungszwischenkreises 2 bildet. Ferner bildet der erste Kondensator 3 am Verschaltungspunkt mit dem zweiten Kondensator 4 einen Mittelpunktanschluss 6. Zudem bildet ein Anschluss des zweiten Kondensators 4 einen unteren Anschluss 7 des Dreipunkt-Gleichspannungszwischenkreises 2.

Erfindungsgemäss umfasst die Stromrichterschaltungsanordnung 1 ein erstes Teilstromrichtersystem 8 und ein zweites Teilstromrichtersystem 9, welches erste Teilstromrichtersystem 8 eingangsseitig an einem ersten Pol 10 einer die Gleichspannung erzeugende Gleichspannungsquelle 11 angeschlossen ist. Gemäss Fig. 1 ist das zweite Teilstromrichtersystem 9 eingangsseitig an einem zweiten Pol 12 der Gleichspannungsquelle 11 angeschlossen ist. Darüber hinaus ist das erste Teilstromrichtersystem 8 mit einem ersten Ausgang 13 mit dem oberen Anschluss 5 verbunden, und das zweite Teilstromrichtersystem 9 ist mit einem ersten Ausgang 14 mit dem unteren Anschluss 7 verbunden.

Erfindungsgemäss ist ferner ein zweiter Ausgang 15 des ersten Teilstromrichtersystems 8 mit einem zweiten Ausgang 16 des zweiten Teilstromrichtersystems 9 über den Mittelpunktanschluss 6 in Serie geschaltet. Vorteilhaft ermöglicht das erste Teilstromrichtersystem 8 eine Einstellung einer am ersten Kondensator 3 anliegenden erste Zwischenkreisspannung $U_{DC1}$ und das zweite Teilstromrichtersystem 9 eine Einstellung einer am zweiten Kondensator 4 anliegende Zwischenkreisspannung $U_{DC1}$ auf einen im wesentlichen konstanten Wert, so dass eine Erzeugung einer über beide Kondensatoren 3, 4 anliegende im wesentlichen konstanten Zwischenkreisspannung, welche der Übersichtlichkeit halber in Fig. 1 nicht eingezeichnet ist, erzielt werden kann. Damit können beispielsweise an den Dreipunkt-Gleichspannungszwischenkreis 2 angeschlossene Stromrichterschaltungen, insbesondere Dreipunktstromrichterschaltungen die angepasste Gleichspannung der Gleichspannungsquelle 11 problemlos weiterverarbeiten, so dass es weder spezieller Auslegungen der Dreipunktstromrichterschaltungen bedarf, noch dass eine aufwendige und komplizierte Ansteuerschaltung für solche Dreipunktstromrichterschaltungen notwendig ist.

Erfindungsgemäss weist die Stromrichterschaltungsanordnung 1 einen kapazitiver Energiespeicher 17 auf, der an den ersten Pol 10 und an den zweiten Pol 12 parallel zur Gleichspannungsquelle 11 angeschlossen ist. Dieser kapazitive Energiespeicher 17 dient vorteilhaft der Zwischenspeicherung elektrischer Energie aus der Gleichspannungsquelle 11. Ein weiterer Vorteil des kapazitiven Energiespeichers 17 besteht darin, dass Oberschwingungsrückwirkungen reduziert werden können.

Darüber hinaus ist gemäss Fig. 1 jedes Teilstromrichtersystem 8, 9 aus n parallel geschalteten Zweigpaaren 18 gebildet, wobei n= 3, 4, 5... ist und nach der ersten Ausführungsform der erfindungsgemässen 1 Stromrichterschaltungsanordnung gemäss Fig. 1 n=4 ist. Jedes Zweigpaar 18 ist erfindungsgemäss aus zwei in Serie geschalteten ansteuerbaren Leistungshalbleiterschaltern 19 aufgebaut, wobei jeder Leistungshalbleiterschalter 19 mit Vorteil einen integrierten ansteuerelektroden-kommutierten Thyristor oder einen Bipolartransistor mit isoliert angeordneter Ansteuerelektrode aufweist. Durch die zwei Teilstromrichtersysteme 8, 9, welche in vorstehend beschriebener Weise über den Mittelpunktanschluss 6 in Serie geschaltet sind, werden vorteilhaft im Strom über den ersten Pol 10 und den zweiten Pol 12 nur gerade harmonische Oberschwingungen bezüglich einer Schaltfrequenz $f_S$ der Leistungshalbleiterschalter 19 eines jeden Zweigpaars 18 generiert. Die Ordnung der harmonischen Oberschwingungen ergibt sich demnach zu

$$r = 2 \cdot n \cdot i \,,$$

wobei r die Ordnung, n die Anzahl der Zweigpaare 18 eines jeden Teilstromrichtersystems 8, 9 und i=1, 2, 3,...sind. Die dazugehörige Frequenz $f_{H,i}$ der entsprechenden harmonischen Oberschwingung ergibt sich dann zu

$$f_{H,i} = r \cdot f_S$$

Eine Erhöhung der Anzahl n der Zweigpaare 18 eines jeden Teilstromrichtersystems 8, 9 führt somit vorteilhaft zu einer Erhöhung der Frequenz $f_{H,i}$ der entsprechenden harmonischen Oberschwingung, was aufgrund von Vorgaben des Strombezugs aus der Gleichspannungsquelle erwünscht ist.

Erfindungsgemäss ist jedes Zweigpaar 18 des ersten Teilstromrichtersystems 8 gemäss Fig. 1 über eine mit dem Verbindungspunkt der seriell geschalteten Leistungshalbleiterschalter 19 verbundene Glättungsinduktivität 20 an den ersten Pol 10 angeschlossen. Desweiteren ist jedes Zweigpaar 18 des zweiten Teilstromrichtersystems 9 über eine mit dem Verbindungspunkt der seriell geschalteten Leistungshalbleiterschalter 19 verbundene Glättungsinduktivität 20 an den zweiten Pol 12 angeschlossen. Die Glättungsinduktivität 20 bewirkt, dass in jedes Teilstromrichtersystem 8, 9 fliessende n Ströme, wobei gemäss Fig. 1 n=4 ist, geglättet werden, so dass die vorstehend erwähnten Harmonischen in ihren Amplituden vorteilhaft reduziert werden können.

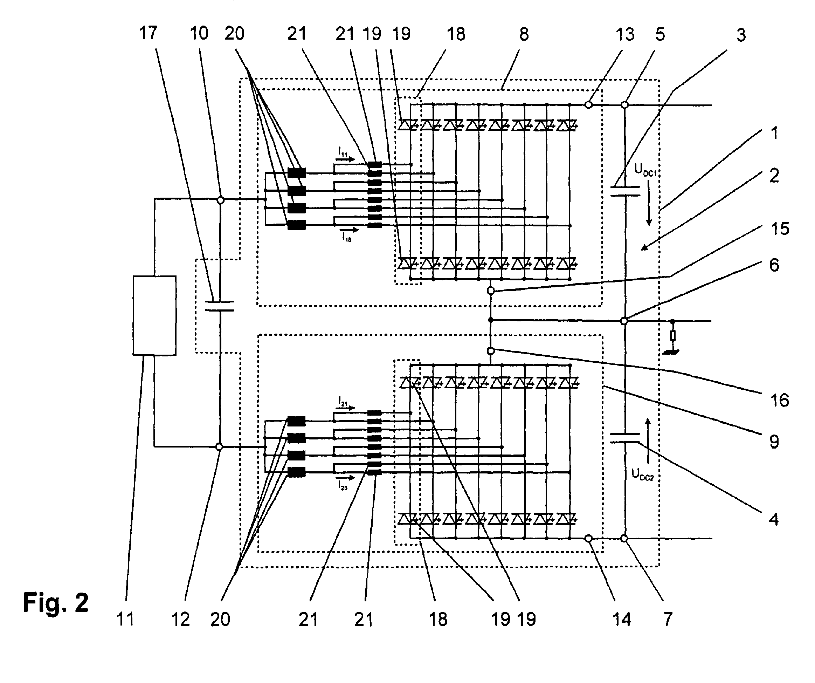

In Fig. 2 ist eine zweite Ausführungsform der erfindungsgemässen Stromrichterschaltungsanordnung 1 dargestellt. Darin ist die Anzahl n=8 Zweigpaare 18 gewählt. Vorzugsweise ist der Mittelpunktanschluss 6 geerdet, damit dem Mittelpunktanschluss 6 ein im wesentlichen fixes Bezugspotential, nämlich das Erdpotential zugeordnet werden kann. Eine solche Erddung erfolgt entweder direkt, d.h. starr oder über einen Erdungswiderstand gemäss Fig. 2. An den seriell geschalteten Leistungshalbleiterschalter 19 eines jeden Zweigpaars 18 des ersten Teilstromrichtersystems 8 ist gemäss Fig. 2 eine Zweigpaarinduktivität 21 des ersten Teilstromrichtersystems 8 angeschlossen, wobei mindestens zwei Zweigpaarinduktivitäten 21 miteinander verbunden sind. Ferner ist am Verbindungspunkt der seriell geschalteten Leistungshalbleiterschalter 19 der Zweigpaare 18 des zweiten Teilstromrichtersystems 9 eine Zweigpaarinduktivität 21 des zweiten Teilstromrichtersystems 9 angeschlossen, wobei mindestens zwei Zweigpaarinduktivitäten 21 miteinander verbunden sind. Mittels der Zweigpaarinduktivitäten 21 ist es möglich, Ausgleichströme $I_{11},...I_{1n}$; $I_{21},...I_{2n}$ mit n=8 zwischen den Zweigpaaren 18 eines jeden Teilstromrichtersystems 8, 9 zu glätten, welche über die der Zweigpaarinduktivitäten 21 miteinander verbunden sind. Weiterhin dienen die Zweigpaarinduktivitäten 21 der Begrenzung der auftretenden Ausgleichströme $I_{11},...I_{1n}$; $I_{21},...I_{2n}$ mit n=8, falls die Leistungshalbleiterschalter 19 und damit die Zweigpaare 18 zeitlich nicht ideal schalten. Darüber hinaus ist am Verbindungspunkt der miteinander verbundenen Zweigpaarinduktivitäten 21 des ersten Teilstromrichtersystems 8 eine Glättungsinduktivität 20 angeschlossen ist, welche mit dem ersten Pol 10 verbunden ist. Am Verbindungspunkt der miteinander verbundenen Zweigpaarinduktivitäten 21 des zweiten Teilstromrichtersystems 9 ist ebenfalls eine Glättungsinduktivität 20 angeschlossen ist, welche mit dem zweiten Pol 12 verbunden ist. Bei den Glättungsinduktivitäten 20 der zweiten Ausführungsform der erfindungsgemässen Stromrichterschaltungsanordnung 1 gemäss Fig. 2 handelt es sich um dieselbe Art von Glättungsinduktivitäten 20 wie in der vorstehend beschriebenen ersten Ausführungsform der erfindungsgemässen Stromrichterschaltungsanordnung 1 gemäss Fig. 1, so dass die Glättungsinduktivitäten 20 gemäss Fig. 2 ebenfalls eine Glättung von in jedes Teilstromrichtersystem 8, 9 fliessende Ströme bewirkt.

Damit dienen die Glättungsinduktivitäten 20 der beiden Ausführungsformen der erfindungsgemässen Stromrichterschaltungsanordnung 1 gemäss Fig. 1 und Fig. 2 vorteilhaft der Reduktion der von den Leistungshalbleiterschaltern 19 zu beherrschenden Ströme. Des weiteren wird durch die Glättungsinduktivitäten 20 eine Reduktion Oberschwingungsrückwirkungen auf die Gleichspannungsquelle 11 erreicht.

Beim erfindungsgemässen Verfahren zur Anpassung der variablen Gleichspannung mittels der vorstehend beschriebenen erfindungsgemässen Stromrichterschaltungsanordnung 1 wird das erste Teilstromrichtersystem 8 mittels der in Fig. 3 dargestellten Ausführungsform der Ansteuerschaltung 28 derart angesteuert, dass die erste Zwischenkreisspannung $U_{DC1}$ auf einen vorgegebbaren Zwischenkreisspannungssollwert $U_{DC, soll}$ eingestellt wird. Darüber hinaus wird das zweite Teilstromrichtersystem 9 erfindungsgemäss derart angesteuert, dass die zweite Zwischenkreisspannung $U_{DC2}$ auf den vorgegebbaren Zwischenkreisspannungssollwert $U_{DC, soll}$ eingestellt wird. Mittels dieser Ansteuerung der Teilstromrichtersysteme 8, 9 wird eine im wesentlichen konstante ersten und zweiten Zwischenkreisspannung $U_{DC1}$, $U_{DC2}$ auf sehr einfache Weise erzeugt., so dass eine Erzeugung der über beide Kondensatoren 3, 4 anliegenden im wesentlichen konstanten Zwischenkreisspannung, welche der Übersichtlichkeit halber in Fig. 1 und Fig. 2 nicht eingezeichnet ist, besonders einfach generiert werden kann. Zudem benötigt eine gängigerweise mit dem Dreipunkt-Gleichspannungszwischenkreis 2 verbundene Dreipunktstromrichterschaltung deshalb vorteilhaft kein kompliziertes und aufwendiges Ansteuerverfahren.

Erfindungsgemäss wird mittels der Ansteuerschaltung 28 gemäss Fig. 3 aus der ersten Zwischenkreisspannung $U_{DC1}$ und der zweiten Zwischenkreisspannung $U_{DC2}$ ein Zwischenkreisspannungsmittelwert $\overline{U_{DC}}$ nach Massgabe der Formel

$$\overline{U_{DC}} = \frac{U_{DC1} + U_{DC2}}{2}$$

gebildet. Dazu umfasst die Ansteuerschaltung 28 einen ersten Mittelwertbildner 22, dem die erste Zwischenkreisspannung $U_{DC1}$ und die zweite Zwischenkreisspannung $U_{DC2}$, welche als gemessene Grössen vorliegen, eingangsseitig zugeführt sind. Weiterhin liegt am Ausgang des ersten Mittelwertbildners 22 der Zwischenkreisspannungsmittelwert $\overline{U_{DC}}$ an. Danach wird aus Zwischenkreisspannungsmittelwert $\overline{U_{DC}}$ und dem Zwischenkreisspannungssollwert $U_{DC, soll}$ ein Zwischenkreisspannungsdifferenzsignal gebildet, welches einem ersten Regler 23, insbesondere mit einer Proportional-Integral-Charakteristik, zugeführt ist. Der erste Regler 23 dient somit der Ausregelung des Zwischenkreisspannungsmittelwertes $U_{DC}$ auf den Zwischenkreisspannungssollwert $U_{DC, soll}$, wodurch ein Stromsollwert $I_{soll}$ gebildet wird, der gemäss Fig. 3 am Ausgang des ersten Reglers 23 anliegt.

Darüber hinaus wird aus n in ein Teilstromrichtersystem 8, 9 fliessende Ströme $I_{11},...I_{1n}$; $I_{21},...I_{2n}$ ein Strommittelwert $\overline{I}$ gebildet, wobei n=3, 4, 5, ... und n der Anzahl parallel geschalteter Zweigpaare 18 des entsprechenden Teilstromrichtersystems 8, 9 entspricht. Wie vorstehend erwähnt ist gemäss Fig. 1 n=4 und gemäss Fig. 2 n=8. Zur Bildung des Strommittelwertes $\overline{I}$ ist gemäss Fig. 3 ein zweiter Mittelwertbildner 25 vorgesehen, dem die Ströme $I_{11},...I_{1n}$ oder $I_{21},...I_{2n}$, welche als gemessene Grössen vorliegen, eingangsseitig zugeführt sind. Weiterhin liegt am Ausgang des zweiten Mittelwertbildners 22 der Strommittelwert $\overline{I}$ an. Aus dem Strommittelwert $\overline{I}$ und dem Stromsollwert $I_{soll}$ wird gemäss Fig. 3 ein Stromdifferenzsignal gebildet, welches einem zweiten Regler 24, insbesondere mit einer Proportional-Integral-Charakteristik, zugeführt ist. Der zweite Regler 24 dient damit der Ausregelung des Strommittelwertes $\overline{I}$ auf den Stromsollwert $I_{soll}$, wodurch ein Aussteuergrad λ gebildet wird, der gemäss Fig. 3 am Ausgang des zweiten Reglers 24 anliegt.

Gemäss Fig. 3 werden erfindungsgemäss aus dem Aussteuergrad λ durch eine erste Pulsweitenmodulation eines ersten Pulsweitenmodulators 26 n Ansteuersignale $S_{11},...S_{1n}$ entsprechend der Anzahl der Zweigpaare 18 des ersten Teilstromrichtersystems 8 erzeugt. Die so erzeugten Ansteuersignale $S_{11},...S_{1n}$ liegen am Ausgang des ersten Pulsweitenmodulators 26 an und sind dem ersten Teilstromrichtersystem 8, insbesondere den Zweigpaaren 18 des ersten Teilstromrichtersystems 8 zur Ansteuerung der entsprechenden Leistungshalbleiterschalter 19 zugeführt. Zudem werden aus dem Aussteuergrad λ durch eine zweite Pulsweitenmodulation eines zweiten Pulsweitenmodulators 27 n Ansteuersignale

$S_{21},...S_{2n}$ entsprechend der Anzahl der Zweigpaare 18 des zweiten Teilstromrichtersystems 9 erzeugt. Die erzeugten Ansteuersignale $S_{11},...S_{1n}$ liegen gemäss Fig. 3 am Ausgang des zweiten Pulsweitenmodulators 27 an und sind dem zweiten Teilstromrichtersystem 9, insbesondere den Zweigpaaren 18 des zweiten Teilstromrichtersystems 9 zur Ansteuerung der entsprechenden Leistungshalbleiterschalter 19 zugeführt.

Durch das vorstehend beschriebene Verfahren zur Anpassung der variablen Gleichspannung nach der Erfindung wird mittels der Ansteuerung der Teilstromrichtersysteme 8, 9 vorteilhaft eine im wesentlichen konstante erste und zweite Zwischenkreisspannung $U_{DC1}$, $U_{DC2}$ auf sehr einfache Weise erzeugt, wobei durch die Ausregelung des Zwischenkreisspannungsmittelwertes $\overline{U_{DC}}$ auf den Zwischenkreisspannungssollwert $U_{DC, soll}$ sowie durch die Ausregelung des Strommittelwertes $\overline{I}$ auf den Stromsollwert $I_{soll}$ zudem der Dreipunkt-Gleichspannungszwischenkreis 2, insbesondere die beiden Zwischenkreisspannungen $U_{DC1}$, $U_{DC2}$ stabilisiert werden können. Weiterhin werden durch die ausgangsseitige Serienschaltung der beiden Teilstromrichtersysteme 8, 9 und deren Ansteuerung in Verbindung mit den Glättungsinduktivitäten 20 vorteilhaft nur sehr kleine Ausgangs-Rippelströme erzeugt an den Ausgängen 13, 14, 15, 16 erzeugt, welche somit den Dreipunkt-Gleichspannungszwischenkreis 2 nahezu nicht belasten.

Insgesamt stellt die erfindungsgemässe Stromrichterschaltungsanordnung 1 eine äusserst kostengünstige Lösung dar, da sie mit einem Minimum an Komponenten auskommt und somit einfach zu realisieren ist und aufwendige Wartungs- und Reparaturarbeiten reduziert werden können. Ferner ist durch das erfindungsgemässe Verfahren zur Anpassung einer variablen Gleichspannung eine Möglichkeit angegeben, wie die im wesentlichen konstante Zwischenkreisspannung des Gleichspannungszwischenkreises 2 auf sehr einfache und effiziente Weise erzeugt werden kann.

**Bezugszeichenliste**

1 Stromrichterschaltungsanordnung
2 Dreipunkt-Gleichspannungszwischenkreis
3 erster Kondensator
4 zweiter Kondensator
5 oberer Anschluss
6 Mittelpunktanschluss
7 unterer Anschluss
8 erstes Teilstromrichtersystem
9 zweites Teilstromrichtersystem
10 erster Pol
11 Gleichspannungsquelle
12 zweiter Pol
13 erster Ausgang des ersten Teilstromrichtersystems
14 erster Ausgang des zweiten Teilstromrichtersystems
15 zweiter Ausgang des ersten Teilstromrichtersystems
16 zweiter Ausgang des zweiten Teilstromrichtersystems
17 Energiespeicher
18 Zweigpaar
19 Leistungshalbleiterschalter
20 Glättungsinduktivität
21 Zweigpaarinduktivität
22 erster Mittelwertbildner
23 erster Regler
24 zweiter Regler
25 zweiter Mittelwertbildner
26 erster Pulsweitenmodulator
27 zweiter Pulsweitenmodulator
28 Ansteuerschaltung

**Patentansprüche**

1. Stromrichterschaltungsanordnung zur Anpassung einer variablen Gleichspannung mit einer Ansteuerschaltung (28) zur Erzeugung von Ansteuersignalen ($S_{11},...S_{1n}$; $S_{21}...S_{2n}$) und einem Dreipunkt-Gleichspannungszwischenkreis (2), der durch einen ersten Kondensator (3) und einen dazu in Serie geschalteten zweiten Kondensator (4) gebildet ist, wobei ein Anschluss des ersten Kondensators (3) einen oberen Anschluss (5) des Dreipunkt-Gleichspannungszwischenkreises (2) bildet und der erste Kondensator (3) am Verschaltungspunkt mit dem zweiten Kondensator (4) einen Mittelpunktanschluss (6) bildet und ein Anschluss des zweiten Kondensators (4) einen unteren Anschluss (7) des Dreipunkt-Gleichspannungszwischenkreises (2) bildet, mit einem ersten Teilstromrichtersystem (8) und einem zweiten Teilstromrichtersystem (9), wobei das zweite Teilstromrichtersystem (9) bezüglich des ersten Teilstromrichtersystems (8) bauelementunabhängig ist, wobei das erste Teilstromrichtersystem (8) mit einem ersten Ausgang (13) mit dem oberen Anschluss (5) verbunden ist und das zweite Teilstromrichtersystem (9) mit einem ersten Ausgang (14) mit dem unteren Anschluss (7) verbunden ist, und wobei ein zweiter Ausgang (15) des ersten Teilstromrichtersystems (8) mit einem zweiten Ausgang (16) des zweiten Teilstromrichtersystems (9) über den Mittelpunktanschluss (6) in Serie geschaltet ist, **dadurch gekennzeichnet, dass**
das erste Teilstromrichtersystem (8) eingangsseitig ausschliesslich an einem ersten Pol (10) einer die Gleichspannung erzeugende Gleichspannungsquelle (11) angeschlossen ist und das zweite Teilstromrichtersystem (9) eingangsseitig ausschliesslich an einem zweiten Pol (12) der Gleichspannungsquelle (11) angeschlossen ist.

2. Stromrichterschaltungsanordnung nach Anspruch 1, **dadurch gekennzeichnet, dass** ein kapazitiver Energiespeicher (17) an den ersten Pol (10) und an den zweiten Pol (12) parallel zur Gleichspannungsquelle (11) angeschlossen ist.

3. Stromrichterschaltungsanordnung nach Anspruch 1, **dadurch gekennzeichnet, dass** der Mittelpunktanschluss (6) geerdet ist.

4. Stromrichterschaltungsanordnung nach Anspruch 1, **dadurch gekennzeichnet, dass** jedes Teilstromrichtersystem (8, 9) aus n parallel geschalteten Zweigpaaren (18) gebildet ist, wobei n = 3, 4, 5, ... ist, und
dass jedes Zweigpaar (18) aus zwei in Serie geschalteten anteuerbaren Leistungshalbleiterschaltern (19) aufgebaut ist.

5. Stromrichterschaltungsanordnung nach Anspruch 4, **dadurch gekennzeichnet, dass** jeder Leistungshalbleiterschalter (19) einen integrierten ansteuerelektroden-kommutierten Thyristor oder einen Bipolartransistor mit isoliert angeordneter Ansteuerelektrode aufweist.

6. Stromrichterschaltungsanordnung nach Anspruch 4, **dadurch gekennzeichnet, dass** jedes Zweigpaar (18) des ersten Teilstromrichtersystems (8) über eine mit dem Verbindungspunkt der seriell geschalteten Leistungshalbleiterschalter (19) verbundene Glättungsinduktivität (20) an den ersten Pol (10) angeschlossen ist, und
dass jedes Zweigpaar (18) des zweiten Teilstromrichtersystems (9) über eine mit dem Verbindungspunkt der seriell geschalteten Leistungshalbleiterschalter (19) verbundene Glättungsinduktivität (20) an den zweiten Pol (12) angeschlossen ist.

7. Stromrichterschaltungsanordnung nach Anspruch 4, **dadurch gekennzeichnet, dass** am Verbindungspunkt der seriell geschalteten Leistungshalbleiterschalter (19) der Zweigpaare (18) des ersten Teilstromrichtersystems (8) eine Zweigpaarinduktivität (21) des ersten Teilstromrichtersystems (8) angeschlossen ist, wobei mindestens zwei Zweigpaarinduktivitäten (21) miteinander verbunden sind, und
dass am Verbindungspunkt der seriell geschalteten Leistungshalbleiterschalter (19) der Zweigpaare (18) des zweiten Teilstromrichtersystems (9) eine Zweigpaarinduktivität (21) des zweiten Teilstromrichtersystems (9) angeschlossen ist, wobei mindestens zwei Zweigpaarinduktivitäten (21) miteinander verbunden sind.

8. Stromrichterschaltungsanordnung nach Anspruch 7, **dadurch gekennzeichnet, dass** am Verbindungspunkt der miteinander verbundenen Zweigpaarinduktivitäten (21) des ersten Teilstromrichtersystems (8) eine Glättungsinduktivität (20) angeschlossen ist, welche mit dem ersten Pol (10) verbunden ist, und
dass am Verbindungspunkt der miteinander verbundenen Zweigpaarinduktivitäten (21) des zweiten Teilstromrichtersystems (9) eine Glättungsinduktivität (20) angeschlossen ist, welche mit dem zweiten Pol (12) verbunden ist.

9. Verfahren zur Anpassung einer variablen Gleichspannung, bei dem eine Stromrichterschaltungsanordnung (1) einen Dreipunkt-Gleichspannungszwischenkreis (2) aufweist und nach Massgabe von Ansteuersignalen ($S_{11},...S_{1n}$; $S_{21}...S_{2n}$) einer Ansteuerschaltung (28) angesteuert wird, welcher Dreipunkt-Gleichspannungszwischenkreis (2) durch einen ersten Kondensator (3) und einen dazu in Serie geschalteten zweiten Kondensator (4) gebildet ist, wobei ein Anschluss des ersten Kondensators (3) einen oberen Anschluss (5) des Dreipunkt-Gleichspannungszwischenkreises (2) bildet und der erste Kondensator (3) am Verschaltungspunkt mit dem zweiten Kondensator (4) einen Mittelpunktanschluss (6) bildet und ein Anschluss des zweiten Kondensators (4) einen unteren Anschluss (7) des Dreipunkt-Gleichspannungszwischenkreises (2) bildet, wobei, dass ein erstes Teilstromrichtersystem (8) der Stromrichterschaltungsanordnung (1), welches eingangsseitig ausschliesslich an einem ersten Pol (10) einer die Gleichspannung erzeugende Gleichspannungsquelle (11) angeschlossen ist und mit einem ersten Ausgang (13) mit dem oberen Anschluss (5) verbunden ist und mit einem zweiten Ausgang (15) mit dem Mittelpunktanschluss (6) verbunden ist, derart angesteuert wird, dass eine zwischen dem oberen Anschluss (5) und dem Mittelpunktanschluss (6) anliegende erste Zwischenkreisspannung ($U_{DC1}$) auf einen vorgegebbaren Zwischenkreisspannungssollwert ($U_{DC, soll}$) eingestellt wird, und wobei
ein bezüglich des ersten Teilstromrichtersystems (8) bauelementunabhängiges zweites Teilstromrichtersystem (9) der Stromrichterschaltungsanordnung (1), welches eingangsseitig ausschliesslich an einem zweiten Pol (12) der Gleichspannungsquelle (11) angeschlossen ist und mit einem ersten Ausgang (14) mit dem unteren Anschluss (7) verbunden ist und mit einem zweiten Ausgang (16) mit dem zweiten Ausgang (15) des ersten Teilstromrichtersystems (8) über den Mittelpunktanschluss (6) in Serie geschaltet ist, derart angesteuert wird, dass eine zwischen dem unteren Anschluss (7) und dem Mittelpunktanschluss (6) anliegende zweite Zwischenkreisspannung ($U_{DC2}$) auf den vorgegebbaren Zwischenkreisspannungssollwert ($U_{DC, soll}$) eingestellt wird.

10. Verfahren nach Anspruch 9, **dadurch gekennzeichnet, dass** aus der ersten Zwischenkreisspannung ($U_{DC1}$) und der zweiten Zwischenkreisspannung ($U_{DC2}$) ein Zwischenkreisspannungsmittelwert ($\overline{U_{DC}}$) gebildet wird, und dass ein Stromsollwert ($I_{soll}$) durch Ausregeln des Zwischenkreisspannungsmittelwertes ($\overline{U_{DC}}$) auf den Zwischenkreisspannungssollwert ($U_{DC,\,soll}$) gebildet wird.

11. Verfahren nach Anspruch 10, **dadurch gekennzeichnet, dass** aus n in ein Teilstromrichtersystem (8, 9) fliessende Ströme ($I_{11},...I_{1n}$; $I_{21},...I_{2n}$) ein Strommittelwert ($\bar{I}$) gebildet wird, wobei n=3, 4, 5,... und n der Anzahl parallel geschalteter Zweigpaare (18) des entsprechenden Teilstromrichtersystems (8, 9) entspricht und jedes Zweigpaar (18) aus zwei in Serie geschalteten ansteuerbaren Leistungshalbleiterschaltern (19) aufgebaut ist, und dass ein Aussteuergrad ($\lambda$) durch Ausregeln des Strommittelwertes ($\bar{I}$) auf den Stromsollwert ($I_{soll}$) gebildet wird.

12. Verfahren nach Anspruch 11, **dadurch gekennzeichnet, dass** aus dem Aussteuergrad ($\lambda$) durch eine erste Pulsweitenmodulation eines ersten Pulsweitenmodulators (26) n Ansteuersignale ($S_{11},...S_{1n}$) entsprechend der Anzahl der Zweigpaare (18) des ersten Teilstromrichtersystems (8) erzeugt werden, und dass aus dem Aussteuergrad ($\lambda$) durch eine zweite Pulsweitenmodulation eines zweiten Pulsweitenmodulators (27) n Ansteuersignale ($S_{21},...S_{2n}$) entsprechend der Anzahl der Zweigpaare (18) des zweiten Teilstromrichtersystems (9) erzeugt werden.

**Claims**

1. Converter circuit arrangement for matching a variable DC voltage to a drive circuit (28) for producing drive signals ($S_{11},...S_{1n}$; $S_{21}...S_{2n}$) and having a three-point DC voltage intermediate circuit (2) which is formed by a first capacitor (3) and a second capacitor (4) connected in series with it, with one connection of the first capacitor (3) forming an upper connection (5) of the three-point DC voltage intermediate circuit (2), and the first capacitor (3) forming a center point connection (6) at the junction point with the second capacitor (4) and one connection of the second capacitor (4) forming a lower connection (7) of the three-point DC voltage intermediate circuit (2), with a first partial converter system (8) and a second partial converter system (9), the second partial converter system (9) being component independent in relation to the first partial converter system (8), the first output (13) of the first partial converter system (8) being connected to the upper connection (5), and a first output (14) of the second partial converter system (9) being connected to the lower connection (7), and a second output (15) of the first partial converter system (8) being connected in series with a second output (16) of the second partial converter system (9) via the center point connection (6), **characterized in that** the input side of the first partial converter system (8) is connected solely to a first pole (10) of a DC voltage source (11) which produces the DC voltage, and the input side of the second partial converter system (9) is connected solely to a second pole (12) of the DC voltage source (11).

2. Converter circuit arrangement according to Claim 1, **characterized in that** a capacitive energy store (17) is connected to the first pole (10) and to the second pole (12), in parallel with the DC voltage source (11).

3. Converter circuit arrangement according to Claim 1, **characterized in that** the center point connection (6) is grounded.

4. Converter circuit arrangement according to Claim 1, **characterized in that** each partial converter system (8, 9) is formed from n parallel connected branch pairs (18) where n = 3, 4, 5, ..., and **in that** each branch pair (18) is formed from two power semiconductor switches (19) which can be driven and are connected in series.

5. Converter circuit arrangement according to Claim 4, **characterized in that** each power semiconductor switch (19) has an integrated drive-electrode-commutated thyristor or a bipolar transistor with a drive electrode arranged in an isolated manner.

6. Converter circuit arrangement according to Claim 4, **characterized in that** each branch pair (18) of the first partial converter system (8) is connected to the first pole (10) via a smoothing inductance (20) which is connected to the junction point of the series-connected power semiconductor switches (19), and **in that** each branch pair (18) of the second partial converter system (9) is connected to the second pole (12) via a smoothing inductance (20) which is connected to the junction point of the series-connected power semiconductor switches (19).

7. Converter circuit arrangement according to Claim 4, **characterized in that** a branch pair inductance (21) of the first partial converter system (8) is connected to the junction point of the series-connected power semiconductor switches (19) in the branch pairs (18) of the first partial converter system (8), with at least two branch pair inductances (21) being connected to one another, and

**in that** a branch pair inductance (21) of the second partial converter system (9) is connected to the junction point of the series-connected power semiconductor switches (19) in the branch pairs (18) of the second partial converter system (9), with at least two branch pair inductances (21) being connected to one another.

8. Converter circuit arrangement according to Claim 7, **characterized in that** a smoothing inductance (20), which is connected to the first pole (10), is connected to the junction point of the mutually connected branch pair inductances (21) in the first partial converter system (8), and
**in that** a smoothing inductance (20), which is connected to the second pole (12) is connected to the junction point of the mutually connected branch pair inductances (21) in the second partial converter system (9).

9. Method for matching a variable DC voltage, in which a converter circuit arrangement (1) has a three-point DC voltage intermediate circuit (2) and is driven on the basis of drive signals $(S_{11},...S_{1n}; S_{21}...S_{2n})$ from a drive circuit (28), which three-point DC voltage intermediate circuit (2) is formed by a first capacitor (3) and a second capacitor (4) connected in series with it, with one connection of the first capacitor (3) forming an upper connection (5) of the three-point DC voltage intermediate circuit (2), and the first capacitor (3) forming a center point connection (6) at the junction point with the second capacitor (4) and one connection of the second capacitor (4) forming a lower connection (7) of the three-point DC voltage intermediate circuit (2),
a first partial converter system (8) of the converter circuit arrangement (1), which is connected on the input side solely to a first pole (10) of a DC voltage source (11) which produces the DC voltage and whose first output (13) is connected to the upper connection (5) and whose second output (15) is connected to the center point connection (6), being driven in such a manner that a first intermediate circuit voltage $(U_{DC1})$, which is produced between the upper connection (5) and the center point connection (6) is fed to an intermediate circuit voltage nominal value $(U_{DC, nom})$ which can be predetermined, and
a second partial converter system (9), which is component independent in relation to the first partial converter system (8), of the converter circuit arrangement (1), which is connected on the input side solely to a second pole (12) of the DC voltage source (11) and whose first output (14) is connected to the lower connection (7), and whose second output (16) is connected in series with the second output (15) of the first partial converter system (8) via the center point connection (6), is driven such that a second intermediate circuit voltage $(U_{DC2})$, which is produced between the lower connection (7) and the center point connection (6), is set to the intermediate circuit voltage nominal value $(U_{DC, nom})$ which can be predetermined.

10. Method according to Claim 9, **characterized in that** an intermediate circuit voltage mean value $(\overline{U_{DC}})$ is formed from the first intermediate circuit voltage $(U_{DC1})$ and the second intermediate circuit voltage $(U_{DC2})$, and
**in that** a current nominal value $(I_{nom})$ is formed by stabilizing the intermediate circuit voltage mean value $(\overline{U_{DC}})$ at the intermediate circuit voltage nominal value $(U_{DC, nom})$.

11. Method according to Claim 10, **characterized in that** a current mean value $(\overline{I})$ is formed from n currents $(I_{11}, ...I_{1n}; I_{21}...I_{2n})$ flowing in one partial converter system (8, 9), where n = 3, 4, 5, ... and n corresponds to the number of parallel connected branch pairs (18) of the corresponding partial converter system (8, 9), and each branch pair (18) is formed from two series-connected power semiconductor switches (19) which can be driven, and **in that** a drive level $(\lambda)$ is formed by stabilizing the current mean value $(\overline{I})$ at the current nominal value $(I_{nom})$.

12. Method according to Claim 11, **characterized in that** n drive signals $(S_{11},...S_{1n})$ corresponding to the number of branch pairs (18) in the first partial converter system (8), are produced from the drive level $(\lambda)$ by first pulse width modulation in a first pulse width modulator (26), and
**in that** n drive signals $(S_{21}...S_{2n})$ corresponding to the number of branch pairs (18) in the second partial converter system (9) are produced from the drive level $(\lambda)$ by means of second pulse width modulation in a second pulse width modulator (27).

## Revendications

1. Arrangement de circuit convertisseur statique pour adapter une tension continue variable comprenant un circuit d'excitation (28) pour générer des signaux d'excitation $(S_{11}...S_{1n} ; S_{21}...S_{2n})$ et un circuit intermédiaire de tension continue à trois points (2) qui est formée par un premier condensateur (3) et un deuxième condensateur (4) branché en série avec celui-ci, une borne du premier condensateur (3) formant une borne supérieure (5) du circuit intermédiaire de tension continue à trois points (2) et le premier condensateur (3) formant une borne de point milieu (6) au niveau du point de connexion avec le deuxième condensateur (4) et une borne du deuxième condensateur (4) formant une borne inférieure (7) du circuit intermédiaire de tension continue à trois points (2), comprenant un premier système convertisseur statique partiel (8) et un deuxième système convertisseur statique partiel (9), le deuxième système convertisseur statique partiel (9) possédant des composants indépendants de ceux du premier système convertisseur statique partiel (8), le premier système convertisseur statique partiel (8) étant relié avec une première sortie (13) à la borne supérieure (5) et le deuxième système convertisseur statique partiel (9) étant relié avec une première sortie (14) avec la borne inférieure (7) et une deuxième sortie (15) du premier système convertisseur statique partiel (8) étant branchée en série avec une deuxième sortie (16) du deuxième système convertisseur statique partiel (9) par le biais de la borne de point milieu (6), **caractérisé en ce que** l'entrée du premier système convertisseur statique partiel (8) est uniquement raccordée à un premier pôle (10) d'une source de tension continue (11) qui génère la tension continue et l'entrée du deuxième système convertisseur statique partiel (9) est uniquement raccordée à un deuxième pôle (12) de la source de tension continue (11).

2. Arrangement de circuit convertisseur statique selon la revendication 1, **caractérisé en ce qu'**un accumulateur d'énergie capacitif (17) est raccordé au premier pôle (10) et au deuxième pôle (12) en parallèle avec la source de tension continue (11).

3. Arrangement de circuit convertisseur statique selon la revendication 1, **caractérisé en ce que** la borne de point milieu (6) est reliée à la terre.

4. Arrangement de circuit convertisseur statique selon la revendication 1, **caractérisé en ce que** chaque système convertisseur statique partiel (8, 9) est formé par n paires de branches (18) branchées en parallèle, avec n = 3, 4, 5, ..., et que chaque paire de branches (18) est constituée de deux commutateurs à semiconducteur de puissance (19) commandables branchés en série.

5. Arrangement de circuit convertisseur statique selon la revendication 4, **caractérisé en ce que** chaque commutateur à semiconducteur de puissance (19) présente un thyristor commuté avec électrode d'excitation intégrée ou un transistor bipolaire avec électrode d'excitation isolée.

6. Arrangement de circuit convertisseur statique selon la revendication 4, **caractérisé en ce que** chaque paire de branches (18) du premier système convertisseur statique partiel (8) est raccordée au premier pôle (10) par le biais d'une inductance de lissage (20) reliée avec le point de liaison des commutateurs à semiconducteur de puissance (19) branchés en série et que chaque paire de branches (18) du deuxième système convertisseur statique partiel (9) est raccordée au deuxième pôle (12) par le biais d'une inductance de lissage (20) reliée avec le point de liaison des commutateurs à semiconducteur de puissance (19) branchés en série.

7. Arrangement de circuit convertisseur statique selon la revendication 4, **caractérisé en ce qu'**une inductance de paire de branches (21) du premier système convertisseur statique partiel (8) est reliée au point de liaison des commutateurs à semiconducteur de puissance (19) branchés en série des paires de branches (18) du premier système convertisseur statique partiel (8), au moins deux inductances de paires de branches (21) étant reliées ensemble, et qu'une inductance de paire de branches (21) du deuxième système convertisseur statique partiel (9) est reliée au point de liaison des commutateurs à semiconducteur de puissance (19) branchés en série des paires de branches (18) du deuxième système convertisseur statique partiel (9), au moins deux inductances de paires de branches (21) étant reliées ensemble.

8. Arrangement de circuit convertisseur statique selon la revendication 7, **caractérisé en ce qu'**une inductance de lissage (20) qui est reliée avec le premier pôle (10) est reliée au point de liaison des inductances de paires de branches (21) reliées entre elles du premier système convertisseur statique partiel (8) et qu'une inductance de lissage (20) qui est reliée avec le deuxième pôle (12) est reliée au point de liaison des inductances de paires de branches (21) reliées entre elles du deuxième système convertisseur statique partiel (9).

9. Procédé pour adapter une tension continue variable, avec lequel un arrangement de circuit convertisseur statique (1) présente un circuit intermédiaire de tension continue à trois points (2) et est commandé en fonction de signaux d'excitation ($S_{11}...S_{1n}$ ; $S_{21}...S_{2n}$) d'un circuit d'excitation (28), ledit circuit intermédiaire de tension continue à trois points (2) étant formée par un premier condensateur (3) et un deuxième condensateur (4) branché en série avec celui-ci, une borne du premier condensateur (3) formant une borne supérieure (5) du circuit intermédiaire de tension continue à trois points (2) et le premier condensateur (3) formant une borne de point milieu (6) au niveau du point de connexion avec le deuxième condensateur (4) et une borne du deuxième condensateur (4) formant une borne inférieure (7) du circuit intermédiaire de tension continue à trois points (2), un premier système convertisseur statique partiel (8) de l'arrangement de circuit convertisseur statique (1), dont l'entrée est uniquement raccordée à un premier pôle (10) d'une source de tension continue (11) qui génère la tension continue et qui est relié avec une première sortie (13) à la borne supérieure (5) et qui est relié avec une deuxième sortie (15) avec la borne de point milieu (6), étant commandé de telle sorte qu'une première tension de circuit intermédiaire ($U_{DC1}$) présente entre la borne supérieure (5) et la borne de point milieu (6) est réglée à une valeur de consigne de tension de circuit intermédiaire ($U_{DC, soll}$) pouvant être prédéfinie et un deuxième système convertisseur statique partiel (9) de l'arrangement de circuit convertisseur statique (1), dont les composants sont indépendants de ceux du premier système convertisseur statique partiel (8) et dont l'entrée est uniquement raccordée à un deuxième pôle (12) de la source de tension continue (11) et qui est relié avec une première sortie (14) à la borne inférieure (7) et qui est relié avec une deuxième sortie (16) en série avec la deuxième sortie (15) du premier système convertisseur statique partiel (8) par le biais de la borne de point milieu (6), étant commandé de telle sorte qu'une deuxième tension de circuit intermédiaire ($U_{DC2}$) présente entre la borne inférieure (7) et la borne de point milieu (6) est réglée à la valeur de consigne de tension de circuit intermédiaire ($U_{DC, soll}$) pouvant être prédéfinie.

10. Procédé selon la revendication 9, **caractérisé en ce qu'**une valeur moyenne de tension de circuit intermédiaire ($\overline{U_{DC}}$) est formée à partir de la première tension de circuit intermédiaire ($U_{DC1}$) et de la deuxième tension de circuit intermédiaire ($U_{DC2}$) et qu'une valeur de consigne du courant ($I_{soll}$) est formée en régulant la valeur moyenne de tension de circuit intermédiaire ($\overline{U_{DC}}$) à la valeur de consigne de tension de circuit intermédiaire ($U_{DC, soll}$).

11. Procédé selon la revendication 10, **caractérisé en ce qu'**une valeur moyenne du courant ($\bar{I}$) est formée à partie de n courants ($I_{11}...I_{1n}$ ; $I_{21}...I_{2n}$) qui circulent dans un système convertisseur statique partiel (8, 9), avec n = 3, 4, 5, ... et n désignant le nombre de paires de branches (18) branchées en parallèle du système convertisseur statique partiel (8, 9) correspondant et chaque paire de branches (18) étant constituée de deux commutateurs à semiconducteur de puissance (19) commandables branchés en série, et qu'un taux de modulation ($\lambda$) est formé en régulant la valeur moyenne du courant ($\bar{I}$) à la valeur de consigne du courant ($I_{soll}$).

12. Procédé selon la revendication 11, **caractérisé en ce que** n signaux d'excitation ($S_{11}...S_{1n}$) correspondant au nombre de paires de branches (18) du premier système convertisseur statique partiel (8) sont générés à partir du taux de modulation ($\lambda$) par une première modulation en largeur d'impulsion d'un premier modulateur de largeur d'impulsion (26) et que n signaux d'excitation ($S_{21}...S_{2n}$) correspondant au nombre de paires de branches (18) du deuxième système convertisseur statique partiel (9) sont générés à partir du taux de modulation ($\lambda$) par une deuxième modulation en largeur d'impulsion d'un deuxième modulateur de largeur d'impulsion (27).

Fig. 1

EP 1 298 781 B1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000287441 A

**In der Beschreibung aufgeführte Nicht-Patentliteratur**

- *PATENT ABSTRACTS OF JAPAN,* 05. Februar 2001, vol. 2000, 13